# FASCICULE DE BREVET EUROPEEN

(11) **EP 1 781 874 B1**
(45) Date de publication et mention de la délivrance du brevet: **18.07.2018**
(21) Numéro de dépôt: 05791121.6
(22) Date de dépôt: 19.07.2005
(51) Int. Cl.: E05B 1/00

(54) **Poignée hygiénique tournante apte à équiper l'ouvrant d'une porte**
Hygienischer Griff für einen Türflügel
Hygienic handle adapted for mounting on a door wing

(30) Priorité: 20.07.2004 FR 0408051
(43) Date de publication de la demande: 09.05.2007
(73) Titulaire: Société d'Application Magnétique Automobile, 98000 Monaco (MC)
(72) Inventeur: HOUIS, Richard, F-44300 Nantes (FR)
(74) Mandataire: Gevers & Orès
(86) Numéro de dépôt international: PCT/FR2005/001843
(87) Numéro de publication internationale: WO 2006/018499

(56) Documents cités:
- FR-A- 993 788
- US-A- 1 674 365
- US-A- 2 238 513
- US-B1- 6 189 183
- US-B1- 6 289 557
- PATENT ABSTRACTS OF JAPAN vol. 2003, no. 12, 5 décembre 2003 (2003-12-05) & JP 2003 253713 A (SAN-EI FAUCET MFG CO LTD), 10 septembre 2003 (2003-09-10)
- PATENT ABSTRACTS OF JAPAN vol. 1997, no. 05, 30 mai 1997 (1997-05-30) & JP 09 004752 A (TOTO LTD), 7 janvier 1997 (1997-01-07)

## Description

### DOMAINE TECHNIQUE DE L'INVENTION

La présente invention concerne un organe d'actionnement communément appelé poignée tournante qui est habituellement actionnée par les doigts ou l'intérieur de la main d'un utilisateur.

L'invention concerne notamment une poignée, destinée à être utilisée dans le domaine de l'hygiène, tel que dans le domaine médical et notamment le milieu hospitalier, dans le domaine agroalimentaire ou encore dans l'habitat ou l'automobile.

### ETAT DE LA TECHNIQUE

Dans les collectivités, notamment dans les hôpitaux, la question de l'hygiène est une question de plus en plus importante. A l'heure actuelle, en France, entre 5% et 12% des personnes hospitalisées contractent une maladie nosocomiale (Statistiques du Ministère de la Santé, 2003). C'est pourquoi l'hygiène est au premier plan des préoccupations de santé publique.

Les mains sont le principal mode de transmission de germes et de bactéries pathogènes. Les contaminations transmises par les mains nécessitent le recours à des solutions permettant de provoquer la rupture de la transmission. Il est, à cet effet, nécessaire de disposer de solutions non chimiques et faciles à mettre en oeuvre dans les hôpitaux et autres collectivités, et plus particulièrement des solutions ne faisant appel à aucun matériel supplémentaire que celui normalement installé sur les divers équipements concernés en vue de leur utilisation et manipulation.

Il faut notamment modifier la conception des poignées, qui sont habituellement manipulées directement par la main, et plus particulièrement par les doigts qui constituent la zone la plus contaminée.

En effet, une poignée tournante classique est quasiment impossible à manipuler sans faire appel à la main, notamment lorsque l'on provoque d'abord l'actionnement d'un mécanisme tel qu'une serrure puis ensuite l'ouverture de l'ouvrant ou battant de la porte en rotation autour de son axe vertical constitué par les charnières.

Une des solutions consiste à concevoir une poignée de porte qui puissent être actionnée, sans utiliser la main, et notamment en utilisant le bras, l'avant bras ou le poignet de manière à créer une rupture physique de la transmission des bactéries et virus dits "manu-portés".

Une telle poignée, dite hygiénique, comporte de manière connue :
- un moyeu distal d'extrémité apte à être monté à rotation autour d'un axe orthogonal au plan de l'ouvrant et à proximité d'un bord vertical libre de l'ouvrant ;
- un corps principal dont une première extrémité est reliée au moyeu et qui s'étend, depuis le moyeu, dans un plan globalement parallèle à celui de l'ouvrant et en éloignement du bord vertical de l'ouvrant ;
- et une partie proximale d'actionnement de forme générale gauche qui est reliée à la seconde extrémité du corps principal, et qui comporte un tronçon incurvé d'actionnement en forme de "C" qui s'étend depuis ladite seconde extrémité en s'éloignant du plan de l'ouvrant, dont la concavité est orientée globalement en direction du bord libre de l'ouvrant.

Une telle poignée est décrite et représentée dans le document US-A-2.238.513 qui illustre une poignée dite "hygiénique" dont la partie d'extrémité libre permettant son actionnement est en forme d'un "crochet", ou anse, qui est apte à recevoir l'avant-bras ou le bras de l'utilisateur.

Le crochet ou anse est globalement dirigé et ouvert vers le bas de l'ouvrant de la porte, c'est à dire vers le sol, en obligeant ainsi l'utilisateur à se baisser pour mettre en rotation la poignée et en créant ainsi un effort supplémentaire au niveau du dos par rapport à l'utilisation d'une poignée classique.

L'ergonomie d'une telle poignée n'est pas satisfaisante car sa mise en oeuvre quotidienne et répétée aboutit à des fatigues et douleurs pour les utilisateurs qui ne sont pas acceptables, notamment en milieu professionnel, et qui entraînent généralement une utilisation non appropriée de la poigné, c'est à dire à une préhension classique avec la main en mettant ainsi fin à son caractère "hygiénique.

Ces inconvénients expliquent que, malgré sa conception remontant à plus de soixante ans, la poignée proposée dans le document US-A-2.238.513 n'ait trouvé aucune application, notamment dans le domaine hospitalier.

La présente invention a ainsi pour buts de remédier à ces inconvénients et de résoudre le problème d'hygiène en proposant un organe de commande et d'actionnement qui est simple, qui peut s'adapter à un grand nombre de mécanismes existants du type de ceux qui sont actionnés habituellement par une poignée classique, et dont l'ergonomie est telle qu'elle ne nécessite plus des efforts de la part de l'utilisateur qui sont contraires à la structure et à l'équilibre ergonomiques du corps humain.

### BREF RESUME DE L'INVENTION

A cet effet, la présente invention propose une poignée hygiénique tournante du type mentionnée précédemment apte à équiper l'ouvrant d'une porte, caractérisée en ce que, dans la position de repos de la poignée, la concavité du tronçon incurvé est orientée globalement vers le haut de manière à constituer une anse ouverte globalement vers le haut qui est apte à recevoir une partie du bras, du poignet ou du dos de la main d'un utilisateur. D'autres caractéristiques de la poignée de porte sont définies aux revendications secondaires.

### BREVE DESCRIPTION DES FIGURES

D'autres caractéristiques et avantages de l'invention apparaîtront au cours de la lecture de la description détaillée qui va suivre pour la compréhension de laquelle on se reportera aux dessins en annexe dans lesquels :
- la figure 1 est une vue schématique en perspective d'une porte dont l'ouvrant est équipé d'une poignée hygiénique selon l'invention ;
- la figure 2 est une vue de face à plus grande échelle de la poignée de la figure 1 qui est illustrée dans son orientation correspondant à sa position de repos ;
- la figure 3 est une vue de dessus de la poignée de la figure 2 ;
- la figure 4 est une vue de droite de la poignée de la figure 2 ;
- la figure 5 est une vue de gauche de la poignée de la figure 2 ;
- la figure 6 est une vue de dessous de la poignée de la figure 2 ;
- les figures 7 et 8 sont deux vues en perspective, selon des angles de vue différents, de la poignée illustrée à la figure 2 ;
- les figures 9 et 10 sont deux représentations d'une poignée hygiénique simplifiée illustrant son utilisation hygiénique et ergonomique ;
- la figure 11 est une vue schématique en perspective d'un organe hygiénique de commande d'un verrou ne formant partie de l'invention illustrant son utilisation hygiénique et ergonomique ;
- la figure 12 est une vue schématique de droite par rapport à la vue de la figure 1 représentant la porte équipée de d'une paire de poignées symétriques (une sur chaque face) et d'un organe hygiénique de commande d'un verrou selon l'invention ;
- la figure 13 est une vue schématique en perspective qui représente un corps de robinet mélangeur équipé d'un organe hygiénique de commande selon un exemple ne formant pas partie de l'invention.

### DESCRPTION DETAILLEE DES FIGURES

Dans la description qui va suivre des éléments identiques, analogues ou ayant la même fonction seront désignés par les mêmes chiffres de référence.

Dans la description et dans les revendications, on adoptera à titre non limitatif la terminologie verticale, horizontale, haut, bas, supérieur, inférieur, etc. en référence à l'orientation de l'ouvrant de la porte et on utilisera aussi le trièdre (x, y, z) indiqué sur les figures.

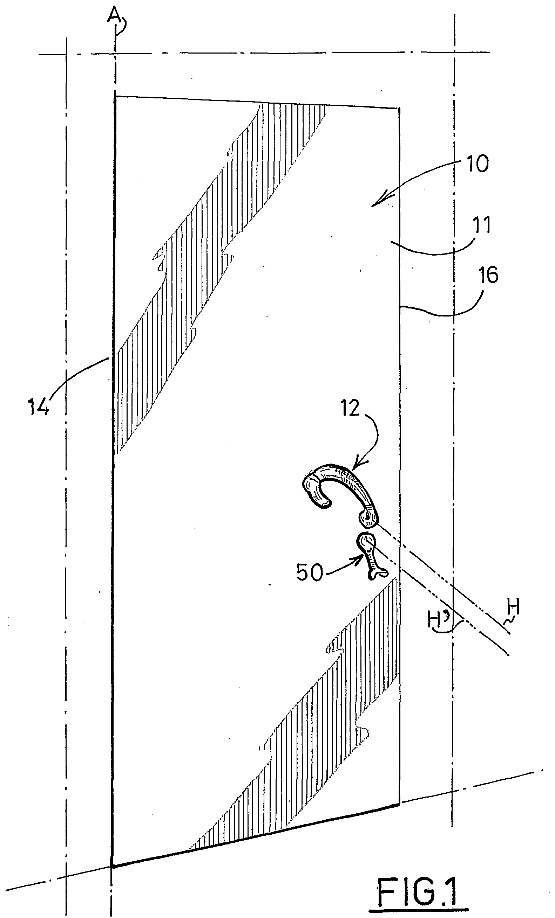

Comme illustré à la figure 1, le battant ou ouvrant 10 d'une porte d'accès à un local est équipée d'une poignée hygiénique 12 selon l'invention

L'ouvrant 10 est monté pivotant autour d'un axe vertical "A" au voisinage de l'un 14 de ses deux bords verticaux, par exemple au moyen de charnières, et la poignée 12 est agencée au voisinage de son autre bord vertical opposé 16.

La poignée 12 permet d'actionner, notamment par l'avant bras ou le bras, le mécanisme de fermeture de la porte, telle qu'une serrure, et elle permet aussi de provoquer le pivotement de l'ouvrant autour de son axe vertical A en vue de l'ouverture.

La poignée 12 selon l'invention est généralement, et à titre d'exemple, en matière plastique et est moulée en une seule pièce, le cas échéant par surmoulage autour d'un noyau central de rigidification par exemple en métal.

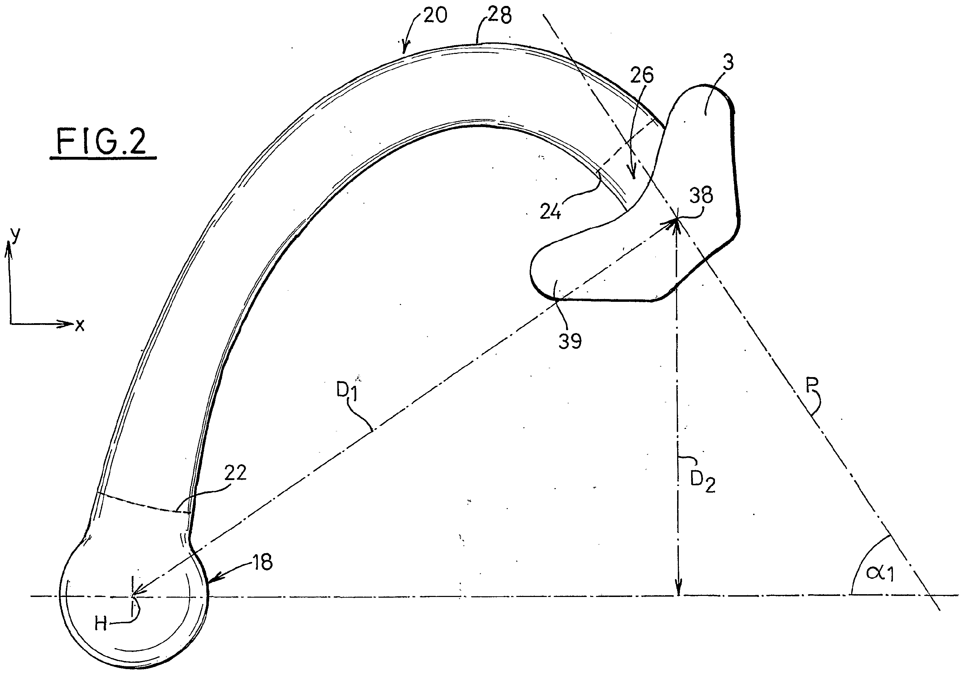

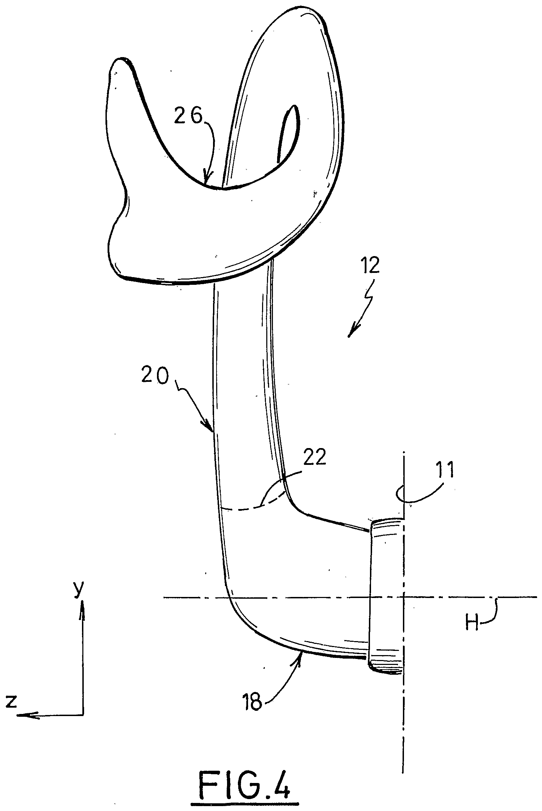

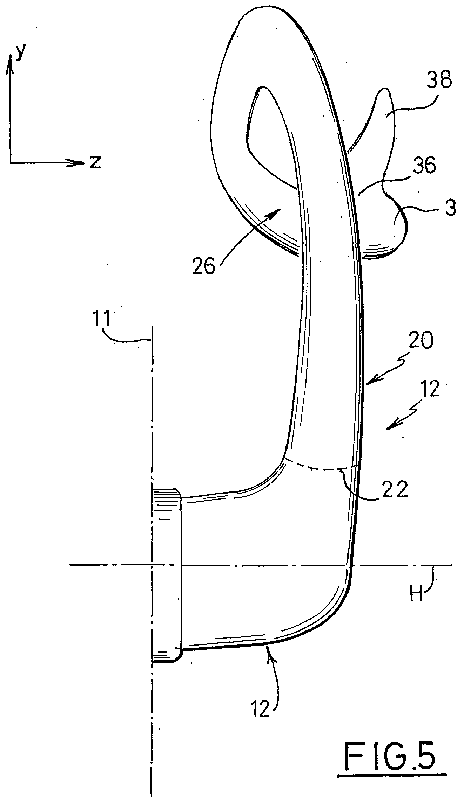

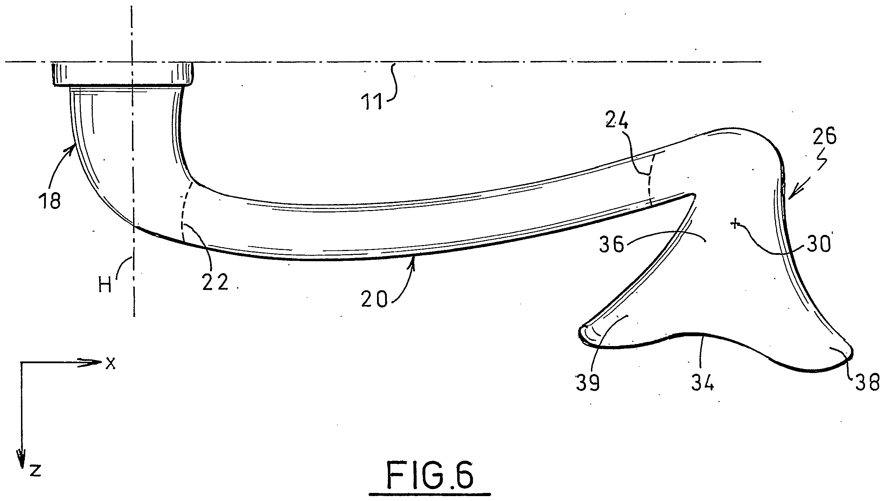

Les figures 2 à 6 illustrent en détail la conception de la poignée hygiénique 12 dans sa position de repos, c'est à dire dans la position que la poignée 12 occupe normalement par rapport à l'ouvrant lorsque l'on n'applique aucune action sur la poignée.

La poignée est, généralement et de manière connue, rappelée élastiquement vers sa position de repos par le mécanisme de la serrure auquel elle est reliée qui comporte notamment un ressort de rappel de l'arbre de commande du mécanisme vers une position angulaire déterminée dans laquelle le pêne 13 du mécanisme est aussi rappelé en position sortie dans laquelle il est apte à coopérer avec une gâche complémentaire équipant le dormant ou encadrement de la porte 10.

La poignée 12 est essentiellement constituée de trois parties dont :
- un moyeu distal d'extrémité 18 qui est apte à être monté à rotation autour d'un axe horizontal "H" orthogonal au plan de l'ouvrant 10 de la porte et à proximité du bord vertical libre 16 de l'ouvrant 10 ;
- un corps principal intermédiaire 20 dont une première extrémité distale 22 est reliée au moyeu 18 et s'étend, depuis le moyeu 18, dans un plan globalement parallèle à celui de l'ouvrant 10 et en éloignement du bord vertical libre 16 de l'ouvrant 10 ;
- et une partie proximale 26 d'actionnement de forme générale gauche qui est reliée à la seconde extrémité 24 du corps principal 20, et qui est essentiellement conformée en un tronçon incurvé en forme générale de "C" et qui, selon l'invention, s'étend globalement vers le haut de l'ouvrant depuis la seconde extrémité 24 du corps principal 20 en s'éloignant du plan de l'ouvrant 10, c'est à dire en éloignement de la face plane verticale 11 de l'ouvrant sur laquelle est montée la poignée 12.

Le moyeu 18 est une partie en forme générale de pot creux et qui s'étend selon l'axe H orthogonal au plan de la face 11 de l'ouvrant 10 (qui est parallèle à l'axe "z" du trièdre x, y, z) et qui possède une forme externe arrondie sensiblement en tronc d'ellipsoïde, pour un meilleur confort d'utilisation.

Le moyeu 18 est creux de manière à recevoir des moyens (non représentés) de fixation de la poignée 12 sur l'ouvrant 10 assurant de plus la liaison en rotation de la poignée avec l'arbre du mécanisme de serrure et le positionnement angulaire déterminé du moyeu 18, et donc de la poignée 12, par rapport à cet arbre et donc par rapport à l'ouvrant 10.

Le corps principal intermédiaire 20 est longiligne de section sensiblement circulaire ou elliptique et globalement constante sur toute sa longueur, depuis sa première extrémité 22 reliée à la partie amincie d'extrémité libre du moyeu 18, jusqu'à sa seconde extrémité 24 reliée au tronçon d'actionnement 26 incurvé en "C".

De manière connue, le corps 20 s'étend ainsi globalement en éloignement du moyeu 18 et en éloignement du bord libre 16.

Contrairement à ce qui est connu de l'état de la technique, le corps 20 de la poignée 12 selon l'invention possède une courbure de manière que le corps s'étende verticalement vers le haut (selon l'axe "y" du trièdre x, y, z) au-dessus du moyeu 18 (en considérant la figure 2) et présente un sommet 28 situé verticalement au-dessus du tronçon incurvé en "C", la concavité du corps 20 étant orientée vers le bas afin de libérer de la place pour laisser passer un bras ou un avant bras.

Le sommet 28 est globalement plus proche latéralement (selon l'axe "x" du trièdre x, y, z) du tronçon d'actionnement 26 que du moyeu 18 pour ne pas gêner le bras lors de la rotation de la poignée 12 autour de son axe "H".

La seconde extrémité 24 du corps 20 est aussi située verticalement au-dessus du tronçon d'actionnement 26.

Cette géométrie selon l'invention du corps principal 20, qui est forme générale d'une première anse ouverte vers le bas dite en "col de cygne", détermine ainsi la position, dans le plan x, y du tronçon incurvé 26 d'actionnement par rapport au moyeu 18 et donc par rapport à l'axe de rotation H, et détermine notamment les deux distances D1 et D2 indiquées à la figure 2 qui seront explicitées par la suite.

Le corps 20 s'étend globalement dans un plan parallèle au plan vertical x, y de l'ouvrant 10.

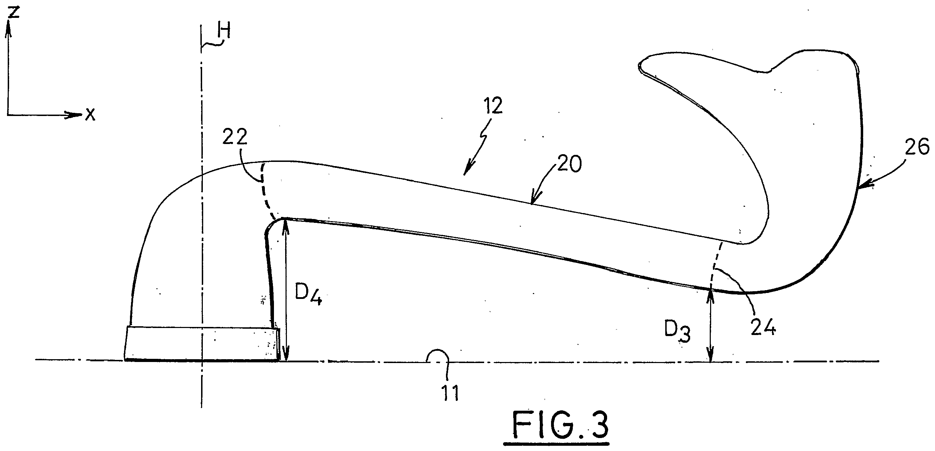

Plus précisément, comme on peut le voir aux figures 3 à 6 et conformément à un aspect de l'invention, la distance moyenne D3 (selon z) entre la seconde extrémité 24 du corps principal 20 et le plan de la face 11 de l'ouvrant 10, est inférieure à la distance moyenne D4 (selon z) entre la première extrémité 22 du corps 20 et le plan de la face 11 de l'ouvrant 10 pour minimiser le dépassement de la forme gauche du tronçon d'actionnement 26 par rapport à l'ouvrant 10. Dans cette conformation, le moyeu 18 est suffisamment dégagé par rapport à l'ouvrant 10 pour permettre un nettoyage ou un démontage faciles et le tronçon 26 est suffisamment proche de l'ouvrant 10 pour éviter d'accrocher.

La partie proximale d'actionnement de forme gauche 26 est un tronçon incurvé en forme générale d'une anse en forme de "C".

Le tronçon 26 s'étend depuis la seconde extrémité 24 du corps principal 20 en s'éloignant (selon l'axe z du trièdre x, y z) du plan de la face 11 de l'ouvrant 10.

Selon l'invention, la concavité du tronçon incurvé 26 est orientée vers le haut de manière à constituer une deuxième anse ouverte globalement vers le haut qui est apte à recevoir une partie basse ou inférieure du bras (de l'avant-bras), du poignet ou du dos de la main d'un utilisateur.

Plus précisément, le tronçon 26 s'étend dans un plan médian "P" qui forme un angle aigu α1 (figure 2) par rapport au plan horizontal passant par l'axe "H".

L'angle α1 est compris entre 30 et 60 degrés, et de préférence sensiblement égal à environ 50 degrés.

Cette orientation et les dimensions et formes du corps principal 20 déterminent la distance moyenne D1 (ou rayon) entre l'axe "H" et le point 30 correspondant au "fond" du tronçon incurvé 26 et la distance verticale D2 entre le point de fond 30 du tronçon 26 et le plan horizontal passant par l'axe H. Dans l'exemple illustré à la figure 2, D1 est sensiblement égal à 200 mm et D2 à 115 mm.

L'invention n'est, bien entendu, pas limitée aux valeurs indiquées pour les paramètres D1 à D4 et α1, mais englobe toutes les conceptions aboutissant à la même ergonomie, et notamment les homothéties, notamment en fonction de la taille moyenne des individus d'un pays déterminé.

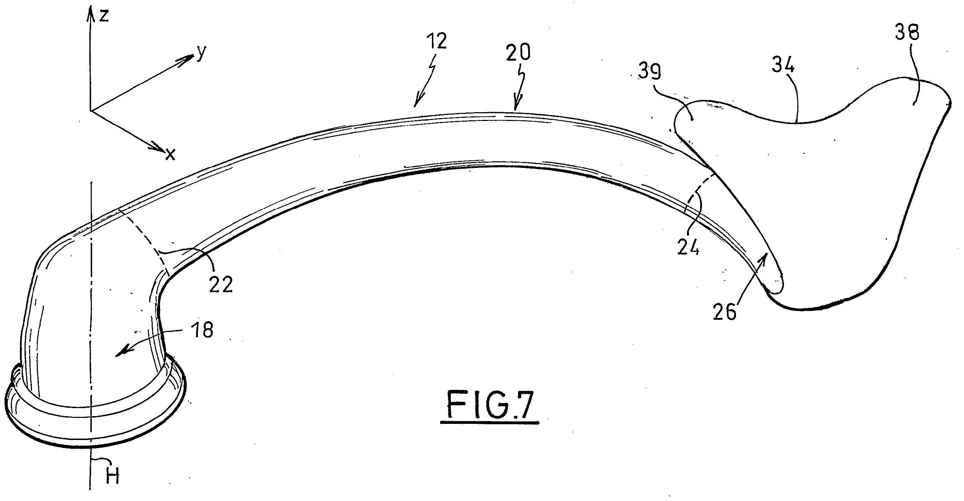

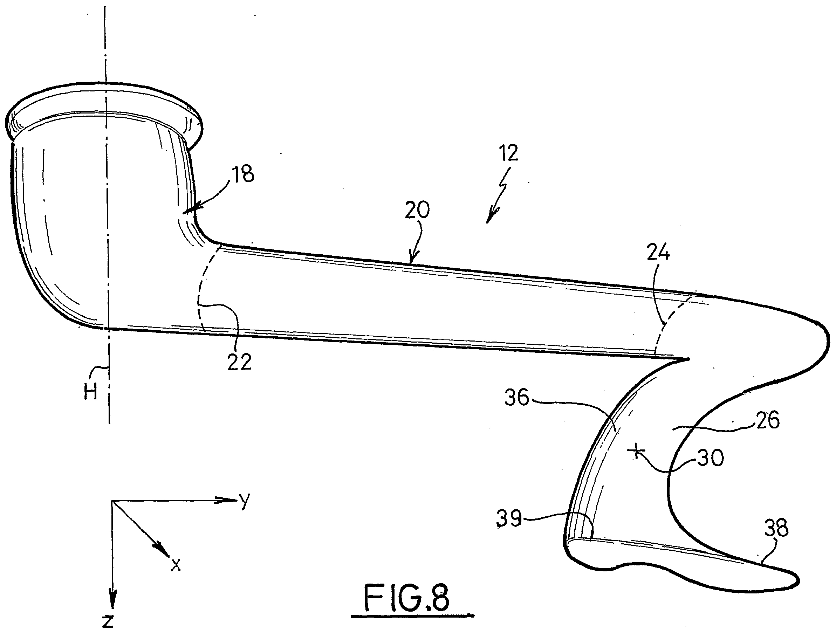

Le tronçon incurvé en "C", visible à la figure 7 et 8, est mince ou étroit au niveau de son extrémité distale raccordée avec la seconde extrémité 24 du corps principal 20 et il s'élargit et s'évase progressivement en direction de son extrémité proximale libre 34 de manière à délimiter une surface concave intérieure d'actionnement 36, dans laquelle est situé le point de fond 30.

L'extrémité proximale 34 se termine par deux lobes, ou becs, 38 et 39 d'extrémité libre dont un lobe dit supérieur 38 et un lobe dit inférieur 39.

La surface 36 est suffisamment grande pour faciliter l'actionnement de la poignée 12 en rotation vers le haut et/ ou vers le bas avec l'avant-bras, le poignet ou le dos de la main.

Le tronçon incurvé d'actionnement 26 présente aussi une symétrie générale de conception par rapport à son plan médian P.

Le contour de la section du tronçon incurvé d'actionnement 26 est, en tous points convexe et arrondi pour un meilleur confort d'utilisation.

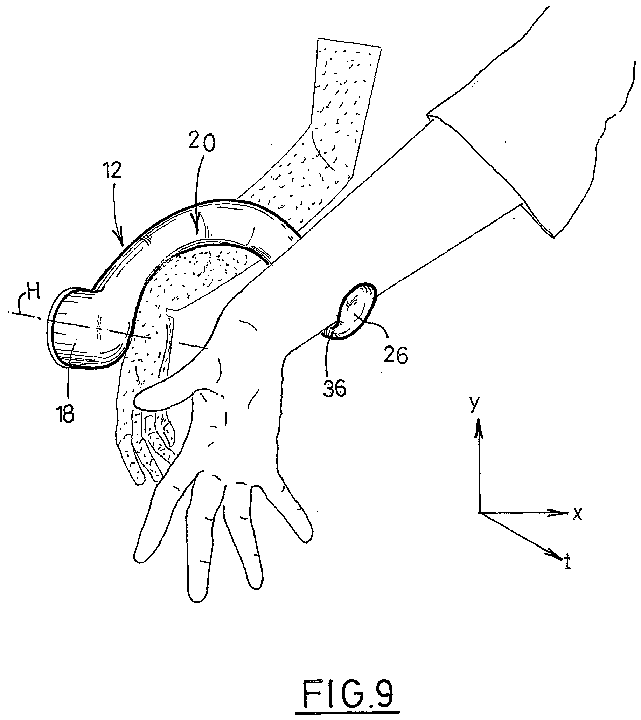

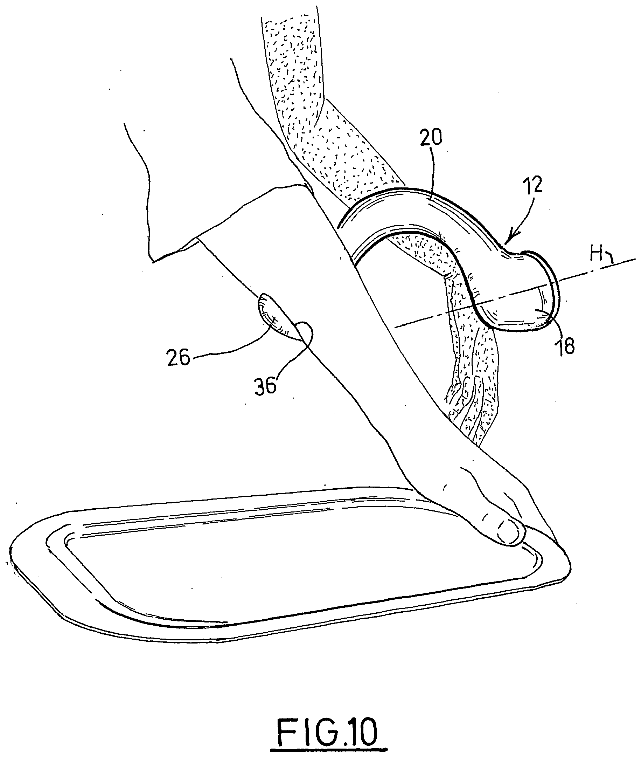

Comme on peut le voir aux figures 9 et 10, auxquelles est représentée une poignée possédant un tronçon d'actionnement 26 dont le tronçon d'extrémité libre est simplifié à un seul lobe central, la conformation et les dimensions du corps principal 20 et du tronçon incurvé d'actionnement 26 permettent de dégager entièrement le tronçon 26 pour son actionnement et de dégager aussi toute la zone située "en dessous" du corps principal 20, et ceci pour aboutir à l'ergonomie avantageuse selon l'invention qui va maintenant être expliquée.

On notera que, dans le cas de certains mécanismes de commande de serrure, l'utilisateur a la possibilité de faire tourner la poignée 12 autour de l'axe H dans les deux sens, c'est à dire soit vers le haut, soit vers le bas de l'ouvrant 10 pour libérer le pêne hors de la gâche.

En utilisation, (figures 9 et 10), l'utilisateur vient placer son bras, son avant-bras, le dos de sa main ou son poignet dans le tronçon incurvé d'actionnement 26, au contact de la surface concave 36.

Pour libérer le pêne de la gâche, il exerce sur la surface concave d'actionnement 36, une pression verticale orientée globalement vers le bas de la porte, c'est à dire vers le sol.

Pour faire ensuite pivoter l'ouvrant 10 de la porte autour de son axe vertical A, l'utilisateur exerce, dans une continuité de mouvement, alors une translation, selon z, en tirant ou en poussant l'ouvrant 10, son avant bras ou poignet étant toujours logé dans la seconde anse en "C" constituée par le tronçon d'actionnement 26.

On notera que le pivotement de la porte autour de son axe peut être effectué quelle que soit la position angulaire de la poignée autour de son axe de rotation H dans la mesure où la partie du bras utilisée est toujours logée dans le tronçon 26, l'orientation angulaire de l'avant-bras par rapport au coude permettant une telle adaptation sans effort ni douleur.

Comme avec une poignée non hygiénique prise en main, l'utilisateur ou l'utilisatrice peut ainsi par exemple laisser la poignée remonter progressivement vers sa position haute de repos pendant qu'il fait pivoter la porte.

Dans le cas d'une commande de la serrure par rotation de la poignée vers le haut, l'utilisateur vient placer son avant-bras ou poignet "en dessous" de la poignée 12 dans la zone creuse formée par le raccordement entre la courbure du corps principal 20 et le tronçon d'actionnement 26. Il exerce alors une pression orientée globalement verticalement vers le haut de l'ouvrant 10 pour libérer le pêne de la gâche et exerce une translation en tirant ou poussant l'ouvrant 10, son poignet ou son avant-bras étant logé et retenu dans cette zone creuse.

Les deux lobes ou becs 38 et 39, visibles sur les figures 2 à 8, ont pour fonction de mieux retenir le bras ou l'avant bras dans le tronçon incurvé 26, et de permettre l'utilisation ergonomique sans contorsions, quelle que soit la position du bras ou de l'avant bras dans le tronçon pour éviter un effort supplémentaire au dos et faciliter la manoeuvre lorsque l'utilisateur veut tirer ou pousser la porte.

Une fois le pêne libéré de la gâche, la partie utilisée du bras agit sur l'un ou l'autre lobe 38, 39.

En effet, lorsque la poignée 12 est en position haute de repos, l'utilisateur peut tirer l'ouvrant de porte 10 en agissant plus particulièrement sur le lobe supérieur 38. Lorsque l'utilisateur applique une pression verticale vers le bas, la poignée 12 quitte sa position de repos et, en position basse, l'utilisateur peut également tirer sur l'ouvrant 10 en agissant plus particulièrement sur le lobe inférieur 39.

Une telle poignée, actionnée par exemple à l'aide du bras, de l'avant-bras ou du poignet ne possède pas, par définition; la même maniabilité qu'une poignée classique.

Il a été reconnu que le poignet pouvait aussi être une partie contaminée par des bactéries et qu'il est ainsi préférable d'actionner la poignée à l'aide de l'avant-bras pour éviter toute contamination.

Pour faciliter la commande du mécanisme (ici de la serrure), la longueur de la poignée 12 selon l'invention est plus importante que celle d'une poignée classique "manuelle" de manière à obtenir une rotation plus facile grâce à un bras de levier plus important.

On peut bien entendu équiper chaque côté ou face de l'ouvrant 10 d'une telle poignée hygiénique et ergonomique. Les deux poignées situées de chaque côté de l'ouvrant sont alors symétriques par rapport au plan de l'ouvrant 10. Ainsi pour équiper des portes de telles poignées de part et d'autre de l'ouvrant, on utilise un jeu de deux poignées symétriques.

Le fait de disposer en stock de ces deux modèles symétriques permet d'équiper n'importe quelle porte avec ouverture à gauche ou à droite, c'est à dire avec des charnières à droite ou à gauche.

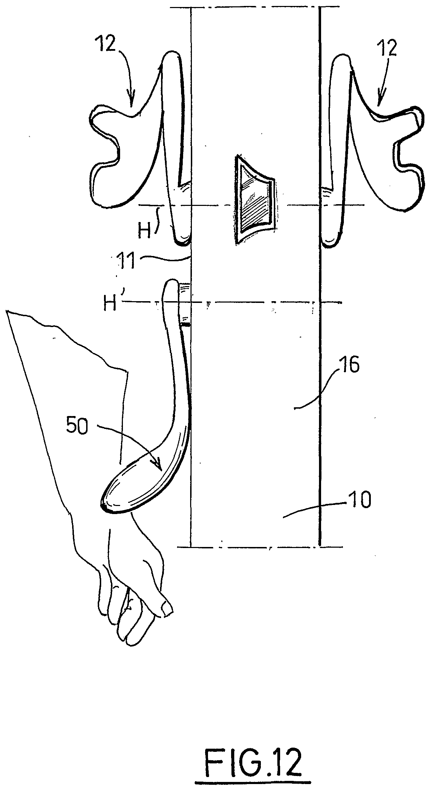

L'ouvrant 10 illustré aux figures 1 et 12 est aussi équipé d'un verrou ou mécanisme de verrouillage qui est muni d'un organe hygiénique tournant 50 ne formant pas partie de l'invention pour la commande du verrouillage ou du déverrouillage que l'on peut actionner sans l'aide des doigts, ni de la main.

L'organe de commande, ou poignée de verrou, 50 est par exemple en matière plastique moulée en une seule pièce, de la même manière que la poignée 12.

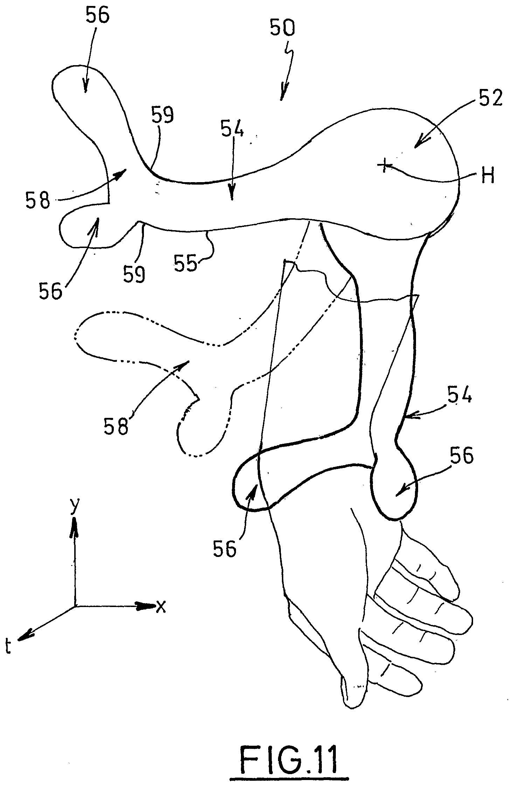

Un tel organe 50, illustré à la figure 11, comporte un moyeu distal d'extrémité 52 apte à être monté à rotation autour d'un axe H' orthogonal au plan de la face 11 de l'ouvrant 10 de manière à occuper par exemple une première position angulaire extrême "basse" dans laquelle la porte est déverrouillée et une position angulaire extrême "haute" dans laquelle la porte est verrouillée.

Les deux positions extrêmes sont ici décalées angulairement d'environ 90 degrés d'angle de manière que, en position haute, la poignée 50 s'étende globalement dans un plan horizontal tandis que, en position basse, la poignée 50 s'étend ici globalement dans un plan vertical.

En fonction des variantes existantes de mécanismes de verrouillage, les deux positions décrites ci-dessus peuvent être inversées et orientées de manière différente.

Le moyeu est fixé à proximité du bord vertical libre 16 de l'ouvrant 10 en dessous du moyeu 18 de la poignée de porte 12 et sensiblement au droit de celui-ci.

Le moyeu 52 est constitué d'un pot creux de manière à recevoir des moyens (non représentés) de fixation de la poignée de verrou 50 sur l'ouvrant 10 en assurant de plus la liaison en rotation de la poignée avec l'arbre du mécanisme de verrouillage et le positionnement angulaire déterminé du moyeu 52, et donc de la poignée 50, par rapport à cet arbre et donc par rapport à l'ouvrant 10, et il possède une forme arrondie sensiblement en tronc d'ellipsoïde.

La poignée de verrou 50 comporte une branche (ou corps) principale 54 dont une première extrémité distale est reliée à une extrémité du moyeu 52 et dont la seconde extrémité proximale se prolonge par deux branches secondaires 56 d'extrémité proximale.

Les deux branches secondaires 56 d'extrémité s'écartent symétriquement de part et d'autre du plan médian de la poignée de verrou 50 qui est un plan orthogonal au plan de la porte, c'est à dire parallèle à l'axe de rotation H'.

Les branches secondaires 56 délimitent entre elles un crochet 58 en forme générale d'une anse ouverte en "C". Des courbures 59, au niveau du raccordement des deux branches 58, de part et d'autre de celles ci seront également utiles pour la suite de la description.

La branche principale 54 comporte une première partie en forme de coude ou de col 55 de manière à s'étendre d'abord dans un plan parallèle au plan de la face 11 puis dans un plan orthogonal à la face 11 en éloignement de l'ouvrant 10.

Les branches secondaires 56 s'étendent symétriquement par rapport au plan médian du verrou 50 dans le même plan que la seconde partie de la branche principale 54.

La poignée de verrou 50 peut occuper deux positions sensiblement orthogonales l'une par rapport à l'autre. Dans la position "basse" correspondant à la position déverrouillée de la porte, la branche principale 54 s'étend globalement verticalement vers le sol. Les deux branches secondaires 56 symétriques s'étendent alors en éloignement de la face 11 et globalement dans un plan commun horizontal.

Dans la position "haute" correspondant à la position verrouillée de la porte, la branche principale 54 s'étend globalement horizontalement et les branches secondaires symétriques s'étendent alors globalement dans un plan vertical commun orthogonal à la face 11.

Pour passer d'une position extrême à l'autre, l'utilisateur place généralement son avant-bras ou son poignet dans l'anse ou crochet 58 qui est globalement ouverte en éloignement de la face 11 avec sa concavité orientée de manière à recevoir par exemple l'avant-bras de l'utilisateur.

L'utilisateur actionne le verrou en agissant sur la poignée 50 en provoquant une rotation d'un quart de tour. L'utilisateur peut aussi placer son avant bras ou son poignet à l'extérieur du crochet 56, au niveau des courbures ou zones incurvées 59 qui existent entre la branche principale 54 et une des branches secondaires 56 et exercer une pression pour verrouiller ou déverrouiller la porte.

Selon un autre exemple ne formant pas partie de l'invention, un organe de commande de forme générale en "Y" comme l'organe 50 peut être utilisé pour commander ou actionner un mécanisme d'ouverture/fermeture d'un robinet dit mélangeur ou mitigeur pour régler le débit de l'eau ainsi que la température de l'eau, au moyen du bras, du poignet ou de l'avant bras.

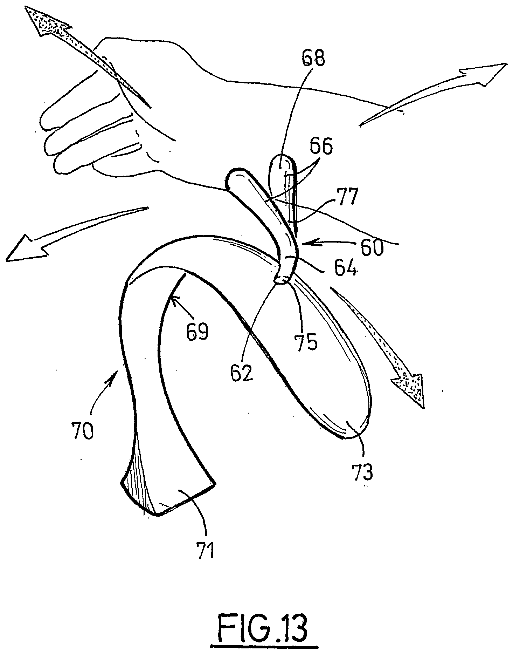

L'organe ou levier de commande 60 selon l'invention, illustré à la figure 13, est monté globalement à rotation autour d'un point ou centre 62, par des moyens non représentés du type rotule ou à la Cardan.

Le levier de commande 60 est monté, de manière connue, sur la face supérieure du corps 69 d'un robinet mélangeur 70 en forme générale de "col de cygne" plus ou moins prononcée.

Une extrémité arrière et inférieure 71 du corps 69 est apte à être montée sur le bord arrière de la vasque (non représentée), tandis que son extrémité libre avant 73 orientée vers l'utilisateur du lavabo ou de l'évier comporte l'orifice de sortie de l'eau.

L'organe de commande 60 en forme de levier comporte une première tige 64 formant son corps principal qui, dans la position médiane de repos illustrée à la figure s'étend dans un plan vertical vers le haut et au-dessus du robinet 70 depuis sa première extrémité distale articulée 75

Le levier 60 comporte aussi deux tiges annexes ou secondaires 66 qui s'étendent depuis la seconde extrémité 77 de la tige principale 64 et qui s'écartent symétriquement de part et d'autre du plan médian ici de symétrie de l'organe de commande 60 qui est un plan vertical.

Les tiges secondaires d'extrémité libre proximales 66 délimitent entre elles un crochet 68 en forme générale d'anse ouverte en "C" qui est apte à recevoir un bras, un avant-bras ou un poignet.

Les deux tiges proximales 66 symétriques et opposées s'étendent dans un plan commun qui est incliné par rapport à l'horizontale et qui est orienté vers l'arrière du robinet 70.

L'utilisateur place généralement son poignet à l'intérieur de la concavité de l'anse ou crochet 68.

Il peut alors exercer une force orientée convenablement pour mettre l'organe de commande 60 en rotation autour du point 62, d'avant en arrière et/ou de gauche à droite du robinet 70 de manière à régler à la fois le débit d'eau et la température, sans utiliser de parties contaminées de la main telles que la paume de la main ou les doigts.

La conception selon l'invention permet d'équiper aisément des lavabos ou des éviers soit en remplaçant le robinet, soit en remplaçant le levier classique du robinet mitigeur.

## Revendications

1. Poignée hygiénique (12) tournante apte à équiper l'ouvrant (10) d'une porte pour commander l'actionnement d'un mécanisme, tel qu'une serrure, équipant l'ouvrant (10) à partir d'une position de repos vers laquelle la poignée est rappelée élastiquement, et pour permettre la manipulation en pivotement de l'ouvrant autour d'un axe vertical (A),
la poignée (12) étant du type comportant :
- un moyeu (18) distal d'extrémité apte à être monté à rotation autour d'un axe orthogonal (H) au plan de l'ouvrant (10) et à proximité d'un bord vertical libre (16) de l'ouvrant (10) ;
- un corps principal (20) dont une première extrémité (22) est reliée au moyeu (18) et qui s'étend, depuis le moyeu (18), dans un plan globalement parallèle à celui de l'ouvrant (10) et en éloignement du bord vertical (16) de l'ouvrant (10) ;
- et un tronçon (26) d'actionnement de forme gauche qui est relié à la seconde extrémité (24) du corps principal (20), et qui comporte une surface concave intérieure (36) en forme générale de "C" qui s'étend depuis ladite seconde extrémité (22) en s'éloignant du plan de l'ouvrant (10), dont la concavité est orientée globalement en direction du bord libre (16) de l'ouvrant (10),
**caractérisée en ce que**, dans la position de repos de la poignée (12), la concavité (36) du tronçon d'actionnement (26) est orientée globalement vers le haut de manière à constituer une anse ouverte globalement vers le haut qui est apte à recevoir une partie du bras, du poignet ou du dos de la main d'un utilisateur.

2. Poignée (12) selon la revendication précédente, **caractérisée en ce que** le tronçon d'actionnement (26) s'étend dans un plan qui est globalement parallèle à l'axe de rotation (H) du moyeu (18) et qui, dans la position de repos, forme un angle aigu α1 par rapport à l'horizontale qui est compris entre 30 et 60 degrés, de préférence égal à environ 50 degrés.

3. Poignée (12) selon l'une quelconque des revendications précédentes, **caractérisée en ce que** la distance D1 entre le fond de la concavité (36) du tronçon d'actionnement (26) et l'axe de rotation (H) est d'environ 200 mm.

4. Poignée (12) selon l'une quelconque des revendications précédentes, **caractérisée en ce que** la distance D2 entre le fond de la concavité (36) du tronçon d'actionnement (26) et une ligne horizontale passant par l'axe de rotation (H) est d'environ 115 mm.

5. Poignée (12) selon l'une quelconque des revendications précédentes, **caractérisée en ce que** le corps principal (20) est en forme d'un "col de cygne" dont la concavité est orientée globalement vers le bas et dont le sommet (28) est situé au-dessus du tronçon d'actionnement (26).

6. Poignée (12) selon l'une quelconque des revendications précédentes, **caractérisée en ce que** la distance D3 entre la seconde extrémité (24) du corps principal (20) et l'ouvrant (10) est inférieure à la distance D4 entre la première extrémité (22) du corps principal (20) et l'ouvrant (10).

7. Poignée (12) selon l'une quelconque des revendications précédentes, **caractérisée en ce que** le tronçon d'actionnement (26) s'évase progressivement jusqu'à son extrémité libre (34) de manière à délimiter une surface concave d'actionnement (36) se terminant par deux lobes (38) et (39) facilitant l'actionnement de la poignée (12) en translation pour tirer ou pousser l'ouvrant (10).

8. Poignée (12) selon l'une quelconque des revendications précédentes, **caractérisée en ce que** le contour de la section du tronçon d'actionnement (26) est arrondi.

9. Poignée (12) selon l'une quelconque des revendications précédentes, **caractérisée en ce que** le corps principal (20) est de section globalement circulaire ou elliptique.

10. Poignée (12) selon l'une quelconque des revendications précédentes, **caractérisée en ce qu'**elle est réalisée par moulage en une seule pièce.

## Patentansprüche

1. Hygienehandgriff (12), die drehbar angepasst, um das Blatt (10) von einer Tür zur Steuerung des Betriebes eines Mechanismus auszustatten, wie beispielsweise eine Sperre, an die Öffnung angebracht (10) von einer Ruheposition an dem der Griff elastisch zurück, und der zentrale Manipulation des Flügels um eine vertikale Achse (a), der Griff (12) von der Art umfassend zu ermöglichen:
- eine Nabe (18) entferntes Ende angepasst sind angebracht zur Drehung um eine orthogonale Achse (H) zu der Ebene des Flügels (10) und benachbart zu einer freien vertikalen Kante (16) des Flügels (10) sind;
- ein Hauptkörper (20) mit einem ersten W-Ende (22) mit der Nabe verbunden ist (18) und die sie von der Nabe (18) in eine Richtung, die der Öffnung im wesentlichen parallel erstreckt (10) und weg von der vertikalen Kante (16) des Blattes (10);
- und einen Abschnitt (26) für die linke Form Betätigung der mit dem zweiten Ende (24) des Hauptkörpers (20) und die eine innere konkave Oberfläche (36) in der allgemeinen Form eines "C" das erstreckt sich von dem zweiten Ende (22) von der Öffnungsebene weg (10), dessen Konkavität im allgemeinen gegenüber dem freien Rand (16) des Flügels (10),
**dadurch gekennzeichnet dass**, in die Ruheposition des Handgriffs (12), die Konkavität (36) des Betätigungsabschnitts (26) allgemein nach oben ausgerichtet und angepasst ist, um eine Schleife, im allgemeinen nach oben hin offen, zu bilden um einen Teil des Arms, des Handgelenks oder der Rückseite der Hand zu empfangen ein Benutzer.

2. Handgriff (12) nach dem vorhergehenden Anspruch, **dadurch gekennzeichnet, daß** der Betätigungsabschnitt (26) in einer Ebene erstreckt, die zu der Drehachse im allgemeinen parallel ist, (H) der Nabe (18) und der in der Ruhestellung einen spitzen Winkel A1 in Bezug auf die horizontale zwischen 30 und 60 Grad, vorzugsweise etwa 50 Grad beträgt.

3. Handriff (12) nach einem der vorhergehenden Ansprüchen, **dadurch gekennzeichnet, daß** der Abstand D1 zwischen dem Boden der Höhlung (36) des Betätigungsabschnittes (26) und der Drehachse (H) ist, ca. 200 mm.

4. Handgriff (12) nach einem der vorhergehenden Ansprüche, **dadurch gekennzeichnet, daß** der Abstand D2 zwischen dem Boden der Höhlung (36) des Betätigungsabschnitts (26) und einer horizontalen Linie, die durch die Drehachse verläuft (H) etwa 115 mm.

5. Handgriff (12) nach einem der vorhergehenden Ansprüchen, **dadurch gekennzeichnet, dass** der Hauptkörper (20) in Form eines "Schwanenhals", deren Konkavität orientiert im allgemeinen nach unten und der Spitze (28) ist über dem Betätigungsabschnitt (26) angeordnet ist.

6. Handgriff (12) nach einem der vorhergehenden Ansprüchen, **dadurch gekennzeichnet, dass** der Abstand D3 zwischen dem zweiten Ende (24) des Hauptkörpers (20) und der Öffnung (10) geringer als der Abstand D4 zwischen dem ersten Ende (22) der Hauptkörper (20) und die Öffnung (10) aufweisen.

7. Handgriff (12) nach einem der vorhergehenden Ansprüchen, **dadurch gekennzeichnet, daß** der Betätigungsabschnitt (26) verjüngt sich allmählich zu seinem freien Ende (34), um ein konkave Oberfläche Stellglied (36 zu definieren) mit zwei Lappen (38) und (39) erleichtert die Betätigung des Griffes (12) in Translation endet zu ziehen oder das Blatt (1 0) zu drücken.

8. Handgriff (12) nach einem der vorhergehenden Ansprüche, **dadurch gekennzeichnet, dass** die Kontur des Abschnitts des Betätigungsabschnitts (26) abgerundet ist.

9. Handgriff (12) nach einem der vorhergehenden Ansprüchen, **dadurch gekennzeichnet, dass** der Hauptkörper (20) im allgemeinen kreisförmigen oder elliptischen Querschnitt.

10. Handgriff (12) nach einem der vorhergehenden Ansprüchen, **dadurch gekennzeichnet, dass** es durch Formen in einem Stück hergestellt wird.

## Claims

1. A hygienic turning handle (12) capable of being fitted to the opening element (10) of a door to control the actuation of a mechanism, such as a latch, fitted to the opening element (10) from a rest position toward which the handle is elastically returned, and to allow the opening element to be pivoted about a vertical axis (A),
the handle (12) being of the type comprising:
- a distal end hub (18) capable of being mounted so as to rotate about an axis (H) orthogonal to the plane of the opening element (10) and close to a vertical free edge (16) of the opening element (10);
- a main body (20) of which a first end (22) is connected to the hub (18) and which extends, from the hub (18), in a plane generally parallel to that of the opening element (10) and away from the vertical edge (16) of the opening element (10);
- and an actuation section (26) of curved shape which is connected to the second end (24) of the main body (20) and that comprises a concave inner surface (36) that is generally C-shaped which extends from said second end (22) away from the plane of the opening element (10), whose concavity is oriented generally in the direction of the free edge (16) of the opening element (10),
**characterized in that**, in the rest position of the handle (12), the concavity (36) of the actuation section (26) is oriented generally upward so as to form a basket-handle curve that is open generally upward that is capable of receiving a portion of the arm, the wrist or the back of the hand of a user.

2. The handle (12) as claimed in the preceding claim, **characterized in that** the actuation section (26) extends in a plane that is generally parallel to the axis of rotation (H) of the hub (18) and which, in the rest position, forms an acute angle A1 relative to the horizontal that lies between 30 and 60 degrees, preferably equal to approximately 50 degrees.

3. The handle (12) as claimed in either one of the preceding claims, **characterized in that** the distance D1 between the bottom of the concavity (36) of the actuation section (26) and the axis of rotation (H) is approximately 200 mm.

4. The handle (12) as claimed in any one of the preceding claims, **characterized in that** the distance D2 between the bottom of the concavity (36) of the actuation section (26) and a horizontal line passing through the axis of rotation (H) is approximately 115 mm.

5. The handle (12) as claimed in any one of the preceding claims, **characterized in that** the main body (20) is in the shape of a "swan neck" whose concavity is oriented generally downward and whose summit (28) is situated above the actuation section (26).

6. The handle (12) as claimed in any one of the preceding claims, **characterized in that** the distance D3 between the second end (24) of the main body (20) and the opening element (10) is less than the distance D4 between the first end (22) of the main body (20) and the opening element (10).

7. The handle (12) as claimed in any one of the preceding claims, **characterized in that** the actuation section (26) flares out progressively up to its free end (34) so as to delimit a concave actuation surface (36) ending in two lobes (38) and (39) making the actuation of the handle (12) in translation easier in order to pull or push the opening element (10).

8. The handle (12) as claimed in any one of the preceding claims, **characterized in that** the contour of the cross section of the actuation section (26) is rounded.

9. The handle (12) as claimed in any one of the preceding claims, **characterized in that** the main body (20) is of generally circular or elliptical cross section.

10. The handle (12) as claimed in any one of the preceding claims, **characterized in that** it is made by molding in a single piece.
